# EUROPÄISCHE PATENTANMELDUNG

(11) **EP 4 710 749 A1**
(43) Veröffentlichungstag der Anmeldung: **18.03.2026**
(21) Anmeldenummer: 24200876.1
(22) Anmeldetag: 17.09.2024
(51) Int. Cl.: A01D 41/14, A01D 69/06

(54) **ANTRIEBSANORDNUNG ZUM ANTRIEB EINES ERNTEVORSATZES DURCH EINEN FELDHÄCKSLER**

(71) Anmelder: Deere & Company, Moline, IL 61265 (US)
(72) Erfinder: BOUSKA, Martin, 68163 Mannheim (DE); KALEKAR, Shivani, 68163 Mannheim (DE)
(74) Vertreter: Holst, Sönke

(57) **Zusammenfassung**

Eine Antriebsanordnung zum Antrieb eines Erntevorsatzes (20) durch einen Feldhäcksler (10) umfasst einem Antrieb (50), der durch einen Antriebswellenzusammenbau (52) mit einer ersten, vorderseitig an einem Einzugsgehäuse (24) des Feldhäckslers (10) angeordneten Kupplungshälfte (54) verbunden ist, die konfiguriert ist, mit einer zweiten Kupplungshälfte (56) des Erntevorsatzes (20) zusammenzuwirken, wobei zumindest Teile des Antriebswellenzusammenbaus (52) sich in seitlicher Richtung zwischen dem Einzugsgehäuse (24) und einem Bodeneingriffsmittel (14) des Feldhäckslers (10) befinden. Der Antriebswellenzusammenbau (52) umfasst eine durch ein gemeinsames Kreuzgelenk (90) mit der rückwärtigen, teleskopierbaren, mit ihrem rückwärtigen Ende mit dem Antrieb (50) gekoppelten Gelenkwelle (76) verbundene, vordere Gelenkwelle (78), die gegenüber einer Vorwärtsrichtung (V) des Feldhäckslers (10) in der horizontalen Ebene nach vorn und außen abgewinkelt und mit der ersten Kupplungshälfte (54) verbunden ist.

## Beschreibung

Die Erfindung betrifft eine Antriebsanordnung zum Antrieb eines Erntevorsatzes durch einen Feldhäcksler, mit einem Antrieb, der durch einen Antriebswellenzusammenbau mit einer ersten, vorderseitig an einem Einzugsgehäuse des Feldhäckslers angeordneten Kupplungshälfte verbunden ist, die konfiguriert ist, mit einer zweiten Kupplungshälfte des Erntevorsatzes zusammenzuwirken, wobei zumindest Teile des Antriebswellenzusammenbaus sich in seitlicher Richtung zwischen dem Einzugsgehäuse und einem Bodeneingriffsmittel des Feldhäckslers befinden.

### Technologischer Hintergrund

Feldhäcksler werden in der Landwirtschaft verwendet, um Erntegut von einem Feld aufzunehmen, zu häckseln und durch einen Auswurfkrümmer auf ein neben- oder hinterher fahrendes Transportfahrzeug zu überladen. Zur Aufnahme des Ernteguts wird ein Erntevorsatz verwendet, der beispielsweise als Aufsammler (Pick-up) für geschwadetes Gras oder als Maismähvorsatz zur Ernte von stehendem, stängelartigem Erntegut, insbesondere von Mais dient. Das Erntegut wird durch den lösbar am Feldhäcksler angebrachten Erntevorsatz einem Einzugsgehäuse des Feldhäckslers zugeführt, in welchem es durch Vorpresswalzen gefördert und einer Häckseltrommel zugeführt wird, die es in Zusammenwirken mit einer Gegenschneide häckselt. Das Einzugsgehäuse ist zur Höhenverstellung des Erntevorsatzes mittels eines Aktors um die quer zur Vorwärtsrichtung verlaufende Drehachse der Häckseltrommel schwenkbar. Das gehäckselte Erntegut wird optional, insbesondere bei der Maisernte, noch durch einen Körnerprozessor nachbearbeitet und schließlich durch einen Nachbeschleuniger in den Auswurfkrümmer gefördert.

Feldhäcksler stützen sich üblicherweise durch vordere Bodeneingriffsmittel auf dem Erdboden ab, die als Räder mit Reifen oder Gummiraupenlaufwerke ausgeführt sein können. Die vorderen Bodeneingriffsmittel sind nicht lenkbar an einem Rahmengestell des Feldhäckslers angebracht, werden jedoch angetrieben. Die Lenkung erfolgt durch rückwärtige, lenkbare Bodeneingriffsmittel, die üblicherweise als Räder ausgeführt sind.

Die Häckseltrommel und das Einzugsgehäuse sind aus räumlichen Gründen zwischen den vorderen Bodeneingriffsmitteln angeordnet. Zudem befinden sich Längsträger des Tragrahmens und als Treibriemen mit zusammenwirkender Riemenscheibe ausgeführte Antriebsmittel für die Häckseltrommel zwischen den vorderen Bodeneingriffsmitteln. Bei manchen Feldhäckslern sind zudem noch Teile eines Antriebsstrangs für den Erntevorsatz zwischen den vorderen Bodeneingriffsmitteln angeordnet. Dieser Antriebsstrang umfasst einen Hydromotor, eine an der Vorderseite des Einzugsgehäuses angeordnete, erste Kupplungshälfte, die mit einer zugehörigen, zweiten Kupplungshälfte des Erntevorsatzes zusammenwirkt, sowie eine teleskopierbare Gelenkwelle zwischen dem Hydromotor und der ersten Kupplungshälfte, vgl. die als gattungsbildend angesehene EP 2 384 612 A2.

Diese Gelenkwelle ist somit an einer Seite des Einzugsgehäuses zwischen dem Einzugsgehäuse einerseits und dem benachbarten Bodeneingriffsmittel andererseits hindurchzuführen. Falls man nun die Breite der Bodeneingriffsmittel vergrößern möchte, kommen die Bodeneingriffsmittel - bei durch gesetzliche Vorschriften definierter Gesamtbreite des Feldhäckslers, die durch die äußeren Begrenzungen der Bodeneingriffsmittel vorgegeben ist - immer näher an die bisherige, einteilige Gelenkwelle, die sich nicht genau in Fahrtrichtung, sondern dieser gegenüber nach vorn und außen abgewinkelt erstreckt. Bei bestimmten Betriebsbedingungen, z.B. wenn sich das der Gelenkwelle benachbarte Bodeneingriffsmittel unter Belastung verformt, lassen sich bei vergrößerter Breite der Bodeneingriffsmittel unerwünschte Berührungen zwischen der Gelenkwelle (bzw. deren sie umgebenden Schutzhülle) und dem Bodeneingriffsmittel nicht vermeiden. Ähnliches gilt für den Fall einer Höhenverstellung des Erntevorsatzes und somit des Einzugsgehäuses, denn auch dabei ändert sich in einem gewissen Maße der Abstand zwischen Gelenkwelle und Bodeneingriffsmittel.

Eine mögliche Lösung des Problems wäre es, die Kupplungshälften weiter zur Längsmittelebene des Feldhäckslers zu verlegen, was jedoch zu fehlender Rückwärtskompatibilität mit bisherigen Erntevorsätzen führen würde und auch aus Platzgründen problematisch ist.

Eine im Stand der Technik bekannte, relativ aufwändige Lösung ist die Verwendung eines weiteren Getriebes zwischen der Gelenkwelle und der ersten Kupplungshälfte, welches es ermöglicht, die (nach wie vor einteilige) Gelenkwelle parallel zur Vorwärtsrichtung auszurichten und somit näher an die Längsmittelebene des Feldhäckslers zu verlegen (EP 3 906 770 A1 und Prospekt "Feldhäcksler Jaguar" der Fa. Claas, Druckvermerk HRC / 201011010823 NO ME 0923 / 00 0248 843 8).

### Aufgabe

Die der Erfindung zu Grunde liegende Aufgabe wird darin gesehen, die besagten Probleme zu vermeiden.

### Erfindung

Die vorliegende Erfindung wird durch die Patentansprüche definiert.

Eine Antriebsanordnung zum Antrieb eines Erntevorsatzes durch einen Feldhäcksler ist mit einem Antrieb ausgestattet, der durch einen Antriebswellenzusammenbau mit einer ersten, vorderseitig an einem Einzugsgehäuse des Feldhäckslers angeordneten Kupplungshälfte verbunden ist, die konfiguriert ist, mit einer zweiten Kupplungshälfte des Erntevorsatzes zusammenzuwirken, wobei zumindest Teile des Antriebswellenzusammenbaus sich in seitlicher Richtung zwischen dem Einzugsgehäuse und einem Bodeneingriffsmittel des Feldhäckslers befinden. Der Antriebswellenzusammenbau umfasst eine vordere Gelenkwelle und eine rückwärtige Gelenkwelle, die durch ein gemeinsames Kreuzgelenk verbunden sind. Die rückwärtige Gelenkwelle ist teleskopierbar und mit ihrem rückwärtigen Ende mit dem Antrieb gekoppelt. Die vordere Gelenkwelle ist gegenüber einer Vorwärtsrichtung des Feldhäckslers in der horizontalen Ebene nach vorn und außen abgewinkelt und mit der ersten Kupplungshälfte verbunden.

Mit anderen Worten wird vorgeschlagen, den Antrieb durch eine rückwärtige, teleskopierbare Gelenkwelle und eine vordere Gelenkwelle mit der ersten Kupplungshälfte zu verbinden. Die beiden Gelenkwellen sind untereinander durch ein gemeinsames Kreuzgelenk gekoppelt. Während sich die rückwärtige Gelenkwelle zumindest näherungsweise in Vorwärtsrichtung erstrecken kann, ist die vordere Gelenkwelle nach außen hin abgewinkelt, um das beschriebene Problem zu vermeiden, nämlich den vom Antriebswellenzusammenbau eingenommenen Bauraum zwischen dem Bodeneingriffsmittel und dem Einzugsgehäuse zu vermindern. Auf diese Weise lässt sich mit relativ geringem Aufwand eine Verbreiterung der Bodeneingriffsmittel bei gegebener Positionierung der ersten Kupplungshälfte erzielen.

### Ausführungsbeispiel

Anhand der Abbildungen wird ein Ausführungsbeispiel der Erfindung erläutert. Es zeigen:
- Fig. 1: eine schematische seitliche Ansicht eines selbstfahrenden Feldhäckslers,
- Fig. 2: eine schematische Draufsicht auf einen Teil der Antriebsanordnung des Feldhäckslers,
- Fig. 3: eine schematische Draufsicht auf den feldhäckslerseitigen Teil des Antriebs des Erntevorsatzes,
- Fig. 4: die Draufsicht nach Figur 3, jedoch im Falle einer Winkelabweichung der zweiten Kupplungshälfte von ihrem Nennwinkel.

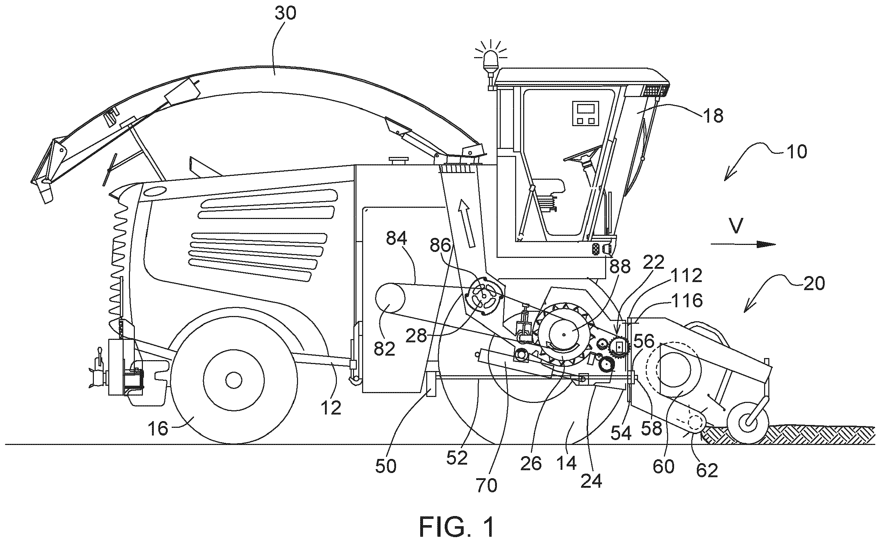

In der Figur 1 ist ein selbstfahrender Feldhäcksler10 in schematischer Seitenansicht dargestellt. Der Feldhäcksler 10 baut sich auf einem Rahmen 12 auf, der von vorderen angetriebenen Bodeneingriffsmitteln 14 vom von Rädern und lenkbaren rückwärtigen Bodeneingriffsmitteln 16 in Form von Rädern getragen wird. Die Bedienung des Feldhäckslers 10 erfolgt von einer Fahrerkabine 18 aus, von der aus ein Erntevorsatz 20 einsehbar ist, der in der dargestellten Ausführungsform als Aufnehmer (Pick-up) ausgeführt ist. Mittels des Erntevorsatzes 20 vom Boden aufgenommenes Erntegut, z. B. Gras oder dergleichen wird über einen Einzugsförderer mit Vorpresswalzen 22, die innerhalb eines Einzugsgehäuses 24 an der Frontseite des Feldhäckslers 10 angeordnet sind, einer unterhalb der Fahrerkabine 18 angeordneten Häckseltrommel 26 zugeführt, die es in kleine Stücke häckselt und es einer Fördervorrichtung 28 aufgibt. Das Gut verlässt den Feldhäcksler 10 zu einem nebenher fahrenden Transportfahrzeug über einen um eine etwa vertikale Achse drehbaren und in der Neigung verstellbaren Auswurfkrümmer 30. Im Folgenden beziehen sich Richtungsangaben, wie seitlich, unten und oben, auf die Vorwärtsrichtung V des Feldhäckslers 10, die in der Figur 1 nach rechts verläuft. Das Einzugsgehäuse 24 ist mittels eines Aktors 70 um die Drehachse der Häckseltrommel 26 schwenkbar, um die Arbeitshöhe bzw. den Bodenauflagedruck des Erntevorsatzes 20 zu kontrollieren und den Erntevorsatz 20 im Vorgewende auszuheben.

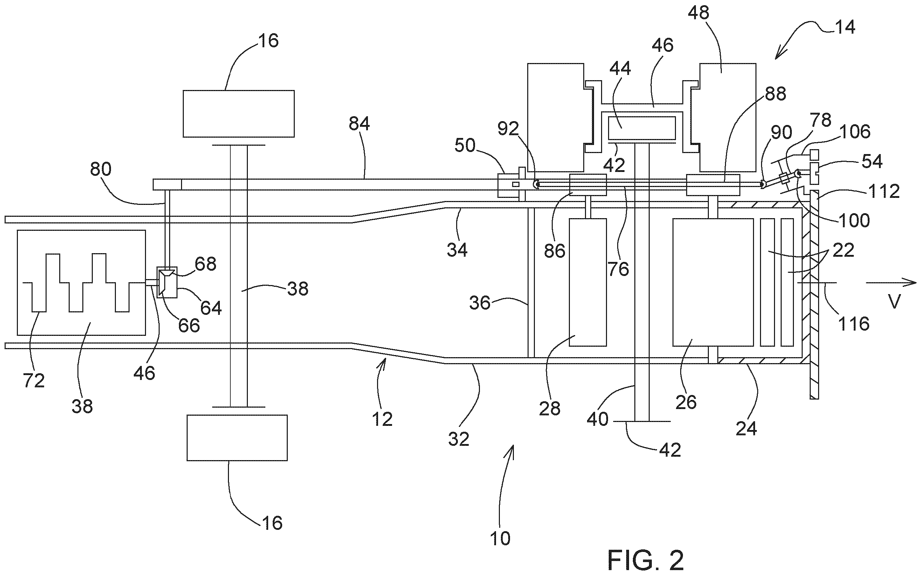

Die Figur 2 zeigt eine schematische Draufsicht auf den Rahmen 12 und die Antriebsanordnung des Feldhäckslers 10. Der Rahmen 12 umfasst zwei sich in Vorwärtsrichtung erstreckende Längsträger 32, 34, die im vorderen Bereich nach außen gekröpft sind. Die Längsträger 32, 34 sind durch Querstreben 36 untereinander verbunden. Im rückwärtigen Bereich des Feldhäckslers 10 ist ein Verbrennungsmotor 38 insbesondere in Form eines Dieselmotors am Rahmen 12 befestigt. Der Verbrennungsmotor 38 umfasst eine Kurbelwelle 72, die sich in der Vorwärtsrichtung V des Feldhäckslers 10 und nach vorn aus dem Gehäuse des Verbrennungsmotors 38 heraus erstreckt. Der Verbrennungsmotor 38 treibt im Betrieb mit seiner Kurbelwelle 42 eine erste Längswelle 46 an, die mit dem ersten Kegelzahnrad 66 eines Winkelgetriebes 64 verbunden ist. Ein zweites Kegelzahnrad 68 des Winkelgetriebes 64 kämmt mit den ersten Kegelzahnrad 66 und ist mit einer Querwelle 80 verbunden, welche über eine Kupplung (nicht gezeigt) mit einer Riemenscheibe 82 antriebsverbunden ist. Ein Treibriemen 84 läuft um die Riemenscheibe 82 um, und wirkt weiterhin mit einer Riemenscheibe 86, die mit der Fördervorrichtung 28 in Verbindung steht, und mit einer Riemenscheibe 88 zusammen, welche die Häckseltrommel 26 antreibt.

Die hinteren Bodeneingriffsmittel 16 sind durch eine Hinterachse 38 (s. DE 10 2013 222 254 A1) am Rahmen 12 befestigt, was analog für die Befestigung der vorderen Bodeneingriffsmittel 14 am Rahmen 12 durch eine Vorderachse 40 gilt. Die Vorderachse 40 trägt an ihren äußeren Enden starr damit verbundene Flansche 42, an denen Endantriebe 44 befestigt sind, an denen Felgen 46 angebracht sind. Die Endantriebe 44 werden durch Wellen (nicht gezeigt) angetrieben, die sich innerhalb der Vorderachse 40 erstrecken und ihrerseits durch einen oder mehrere Antriebe in Drehung versetzbar sind. Die Endantriebe 44 sind mit Felgen 46 verbunden, auf denen die Reifen 48 der vorderen Bodeneingriffsmittel 14 aufgezogen sind. Wenn die vorderen Bodeneingriffsmittel 14 als Raupenlaufwerke ausgeführt sein sollten, wären deren Antriebsräder mit den Endantrieben 44 verbunden.

Details hinsichtlich einer möglichen Ausführungsform des Rahmens 12 finden sich in der DE 10 2023 104 613 A1 und zum Antriebssystem des Feldhäckslers 10 und dessen Steuerung in der DE 10 2014 219 205 A1.

Wie an sich in der EP 2 384 612 A2 beschrieben, erfolgt der Antrieb der beweglichen, angetriebenen Teile des Erntevorsatzes 20 zumindest teilweise durch einen Antriebsstrang, der sich über den Feldhäcksler 10 und den Erntevorsatz 20 erstreckt. Dieser Antriebsstrang umfasst einen Antrieb 50, einen Antriebswellenzusammenbau 52 und eine erste Kupplungshälfte 54, die sich an der vorderen Stirnseite des Einzugsgehäuses 24 befindet und, wenn der Erntevorsatz 20 angekoppelt ist, s. Figur 1, mit einer zweiten Kupplungshälfte 56 zusammenwirkt, die am Erntevorsatz 20 angebracht ist und dort eine Welle 58 antreibt, welche ihrerseits antreibbare Elemente des Erntevorsatzes 20 antreibt, z.B. eine Querförderschnecke 60 und/oder eine Zinkentrommel 62. Bei dem Antrieb 50 kann es sich um einen Hydromotor handeln, obwohl auch ein Elektromotor genutzt werden könnte. Der Antrieb 50 ist insbesondere mit einer veränderbaren Drehzahl ausgestattet und reversierbar. Bestimmte Elemente des Erntevorsatzes 20 könnten anstelle durch den Antrieb 50 und die Kupplungshälften 54, 56 ganz oder teilweise durch andere Antriebsmittel angetrieben werden, z.B. durch einen seitens des Erntevorsatzes 20 angeordneten Hydro- oder Elektromotor, der allein oder durch Überlagerungsgetriebe im Zusammenwirken mit dem Antrieb 50 die Querförderschnecke 60 mit einer gewünschten Geschwindigkeit antreibt (s. EP 1 609 351 A1). Der Antrieb 50 ist starr am Rahmen 12, nämlich am linken Längsträger 34 befestigt, insbesondere an einer daran angebrachten Konsole.

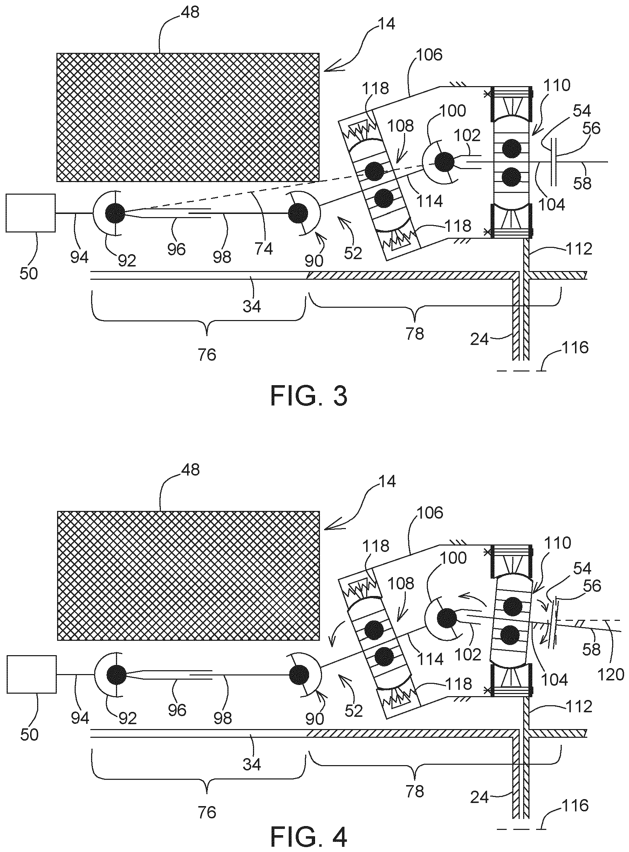

In der gezeigten Ausführungsform ist an der Vorderseite des Einzugsgehäuses 24 eine pendelnd gelagerte Aufnahmeeinrichtung 112 für den Erntevorsatz 20 angebracht, die um eine sich in Vorwärtsrichtung V erstreckende Pendelachse 116 gegenüber dem Einzugsgehäuse 24 frei drehbar (pendelnd) gelagert ist. Die Aufnahmeeinrichtung 112 ist im Rahmen der vorliegenden Offenbarung als Bestandteil des Einzugsgehäuses 24 anzusehen, auch wenn sie vom Einzugsgehäuse 24 abnehmbar sein sollte (s. EP 2 384 612 A2). Die erste Kupplungshälfte 54 ist somit in der Aufnahmeeinrichtung 112 drehbar abgestützt (s. auch Figur 2 und 3). Der Erntevorsatz 24 ist durch Haken oder ähnliche Halteelemente am der Aufnahmeeinrichtung 112 lösbar fixiert (angehängt) und kann zudem daran verriegelt werden. Durch die Pendelachse 116 ergibt sich, neben der Drehung des Einzugsgehäuses 24 um die Drehachse der Häckseltrommel 26, noch ein weiterer Freiheitsgrad des Erntevorsatzes 20 und somit der zweiten Kupplungshälfte 56, der von der ersten Kupplungshälfte 54 mit aufgenommen werden muss. Die zweite Pendelachse 116 ist jedoch optional, sodass die Aufnahmeeinrichtung 112 auch starr am Einzugsgehäuse 24 angebracht oder darin integriert sein könnte.

Anhand der Figuren 2 und 3 ist erkennbar, dass der Antriebswellenzusammenbau 52 sich in seitlicher Richtung zwischen dem Einzugsgehäuse 42 und dem Bodeneingriffsmittel 14, d.h. dem Reifen 48 befindet. Je nach Breite des Reifens 48 steht mehr oder weniger Raum für den Antriebswellenzusammenbau 52 zur Verfügung, was dazu führt, dass bei relativ breiten Reifen ein (wie im Stand der Technik) als einteilige, teleskopierbare Gelenkwelle ausgeführter Antriebswellenzusammenbau 52 bzw. dessen die Gelenkwelle umschließende Schutzhülle mit dem Reifen 48 des linken, vorderen Bodeneingriffsmittels 14 kollidiert bzw. ein gewünschter Sicherheitsabstand nicht einzuhalten ist, denn die einteilige Gelenkwelle muss sich aufgrund der vorgegebenen Positionierungen des Antriebs 50 und der ersten Kupplungshälfte 54 nach vorn und außen hin erstrecken, wie durch die Linie 74 in der Figur 3 gezeigt.

Um zumindest die sich seitlich neben den vorderen Bodeneingriffsmitteln 14 befindlichen - und somit potenziell damit kollidierenden - Teile des Antriebswellenzusammenbaus 52 bei vorgegebener Position der ersten Kupplungshälfte 54 und des Antriebs 50 weiter zur Längsmittelebene des Feldhäckslers 10 zu verlegen, insbesondere ohne ein zusätzliches Zahnradgetriebe an der Vorderseite des Einzugsgehäuses 24 zu benötigen, wird erfindungsgemäß eine doppelte Gelenkwelle als Antriebswellenzusammenbau 52 verwendet. Der Antriebswellenzusammenbau 52 umfasst demgemäß eine hintere Gelenkwelle 76 und eine vordere Gelenkwelle 78, die untereinander durch ein gemeinsames Kreuzgelenk 90 verbunden sind. Die hintere Gelenkwelle 76 umfasst ein rückwärtiges Kreuzgelenk 92, das mit einer Antriebsausgangswelle 94 des Antriebs 50 verbunden ist, und zwei gegeneinander teleskopierbare Wellenabschnitte 96, 98, von denen der hintere Wellenabschnitt 96 mit dem rückwärtigen Kreuzgelenk 92 und der vordere Wellenabschnitt 98 mit dem gemeinsamen Kreuzgelenk 90 verbunden ist. Die vordere Gelenkwelle 78 ist an ihrem rückwärtigen Ende durch das gemeinsame Kreuzgelenk 90 mit der hinteren Gelenkwelle 76 verbunden und umfasst ein vorderes Kreuzgelenk 100, das mit einem vorderen Wellenabschnitt 102 verbunden ist. Der Wellenabschnitt 102 ist mit einer Ausgangswelle 104 teleskopierbar gekoppelt. Die Ausgangswelle 104 ist ihrerseits mit der ersten Kupplungshälfte 54 verbunden. Anders als in den Figuren gezeigt, sind die rückwärtige Gelenkwelle 76 und die vordere Gelenkwelle 78 in ihrem rückwärtig des Gehäuses 106 liegenden Bereich mit fachüblichen Schutzhüllen bzw. -gehäusen (Gelenkwellenschutz) ausgestattet.

Während die Antriebsausgangswelle 94 des Antriebs 50 im Gehäuse des Antriebs 50 gelagert (drehbar abgestützt) ist, ist eine hintere Welle 114 der vorderen Gelenkwelle 78 innerhalb eines abgewinkelten Gehäuses 106 durch eine hintere Lagerung 108 abgestützt. Die hintere Welle 114 erstreckt sich zwischen dem gemeinsamen Kreuzgelenk 90 und dem vorderen Kreuzgelenk 100. Die Ausgangswelle 104 ist im Gehäuse 106 durch eine vordere Lagerung 110 abgestützt. Das Gehäuse 106 ist seinerseits mit der Aufnahmeeinrichtung 112 starr verbunden. Die hintere Welle 114 der vorderen Gelenkwelle 78 ist gegenüber der hinteren Lagerung 108 axial unverschieblich befestigt, was analog für die Ausgangswelle 104 und die vordere Lagerung 110 gilt.

Die hintere Lagerung 108 und somit die hintere Welle 114 sind gegenüber dem Gehäuse 106 um einen gegebenen, durch Anschläge begrenzten Winkelbereich sphärisch, d.h. in vertikaler und horizontaler Richtung, um den Mittelpunkt der Lagerung 108 schwenkbar gelagert und wird in beide Richtungen durch Federn 118 in ihre mittige Ruheposition vorgespannt. Die vordere Lagerung 110 und somit die Ausgangswelle 104 sind gegenüber dem Gehäuse 106 um einen gegebenen, durch Anschläge begrenzten Winkelbereich sphärisch, d.h. in vertikaler und horizontaler Richtung, um den Mittelpunkt der Lagerung 110 frei schwenkbar gelagert. Die Lagerungen 108 und 110 sind demnach gegenüber dem Gehäuse 106 durch Kugelgelenke gelagert, die eine begrenzte Drehung erlauben.

Um den beabsichtigten Abstand zwischen dem Antriebswellenzusammenbau 52 und dem Reifen 48 bzw. den Bodeneingriffsmitteln 14 zu erzielen, sind das Gehäuse 106 und die Lagerungen 108, 110 derart gestaltet, dass sich die hintere Gelenkwelle 76 zumindest näherungsweise entlang der Vorwärtsrichtung V und parallel zur Längsmittelebene des Feldhäckslers 10 erstreckt, während sich die vordere Gelenkwelle 78 schräg zur Vorwärtsrichtung V nach vorn und außen hin abgewinkelt erstreckt, sodass das hintere Ende der vorderen Gelenkwelle 78 in der horizontalen Ebene näher an der Längsmittelebene des Feldhäckslers 10 liegt als das vordere Ende der vorderen Gelenkwelle 78. Das gemeinsame Kreuzgelenk 90 befindet sich in der Nachbarschaft des vorderen Endes des Bodeneingriffsmittels 14, d.h. nahe der Vorderkante des Reifens 48 bzw. Raupenlaufwerks, insbesondere unmittelbar dahinter, wie in der Figur 3 gezeigt.

Im Betrieb sind verschiedene Bewegungen zwischen dem Antrieb 50 und der ersten Kupplungshälfte 54 möglich, die durch den Antriebswellenzusammenbau 52 aufgenommen, d.h. kompensiert, werden. Neben der Verschwenkung des Einzugsgehäuses 24 um die Drehachse der Häckseltrommel 28 durch den Aktor 70 und der Bewegung des Erntevorsatzes 20 und somit der Aufnahmeeinrichtung 112 und der zweiten Kupplungshälfte 56 um die Pendelachse 116, die zumindest größtenteils durch die Kreuzgelenke 90 und 92 und die Teleskopierbarkeit der Abschnitte 96, 98 (und ggf. zu einem kleineren Teil durch die Drehung des hinteren Lagers 108 gegenüber dem Gehäuse 106 und die Teleskopierbarkeit des Wellenabschnitts 102 gegenüber der Ausgangswelle 104) kompensiert werden, können durch Fertigungstoleranzen und durch betriebsbedingte Belastungen entstehende Winkelabweichungen zwischen den Drehachsen der Kupplungshälften 54, 56 auftreten. Die Winkelabweichungen werden, wie in der Figur 4 gezeigt, durch die Drehungen der Lagerungen 108, 110 gegenüber dem Gehäuse 106 ausgeglichen, während sich dabei ergebende axiale Relativbewegungen zwischen den Lagerungen 108, 110 durch die Teleskopierbarkeit des Wellenabschnitts 102 gegenüber der Ausgangswelle 104 ausgeglichen werden.

Hierzu wird auf die Figur 4 verwiesen, in der die gestrichelte Linie 120 die Soll-Ausrichtung der Kupplungshälften 54, 56 aufzeigt, wie sie in der Figur 3 dargestellt ist. Durch die Winkelabweichung der zweiten Kupplungshälfte 56 nach unten folgt die - in an sich bekannter Weise durch Federkraft gegen die zweite Kupplungshälfte 56 vorgespannte und axial gegenüber der Ausgangswelle 104 verschiebbare, s-EP 2 384 612 A2 - erste Kupplungshälfte 54, der zweiten Kupplungshälfte 56 in radialer Richtung und gleichzeitig drehen die Lager 108, 110 um ihre Mittelpunkte. Zudem bewegen (teleskopieren) sich der Wellenabschnitt 102 und die Ausgangswelle 104 in axialer Richtung zueinander. Es wäre im Übrigen auch denkbar, die hintere Welle 114 zwischen dem Lager 108 und dem Kreuzgelenk 100 in sich teleskopierbar zu gestalten anstelle der Teleskopierbarkeit des Wellenabschnitts 102 gegenüber der Ausgangswelle 104.

Eventuelle Abweichungen der Kupplungshälften 54, 56 in radialer Richtung voneinander können durch geeignete, d.h. selbstzentrierende, Formen der zusammenwirkenden Flächen der Kupplungshälften 54, 56 kompensiert werden.

## Patentansprüche

1. Antriebsanordnung zum Antrieb eines Erntevorsatzes (20) durch einen Feldhäcksler (10), mit einem Antrieb (50), der durch einen Antriebswellenzusammenbau (52) mit einer ersten, vorderseitig an einem Einzugsgehäuse (24) des Feldhäckslers (10) angeordneten Kupplungshälfte (54) verbunden ist, die konfiguriert ist, mit einer zweiten Kupplungshälfte (56) des Erntevorsatzes (20) zusammenzuwirken, wobei zumindest Teile des Antriebswellenzusammenbaus (52) sich in seitlicher Richtung zwischen dem Einzugsgehäuse (24) und einem Bodeneingriffsmittel (14) des Feldhäckslers (10) befinden, **dadurch gekennzeichnet, dass** der Antriebswellenzusammenbau (52) eine vordere Gelenkwelle (78) und eine rückwärtige Gelenkwelle (76) umfasst, dass die vordere Gelenkwelle (78) und die rückwärtige Gelenkwelle (76) durch ein gemeinsames Kreuzgelenk (90) untereinander verbunden sind, dass die rückwärtige Gelenkwelle (76) teleskopierbar und mit ihrem rückwärtigen Ende mit dem Antrieb (50) gekoppelt ist und dass die vordere Gelenkwelle (78) gegenüber einer Vorwärtsrichtung (V) des Feldhäckslers (10) in der horizontalen Ebene nach vorn und außen abgewinkelt und mit der ersten Kupplungshälfte (54) verbunden ist.

2. Antriebsanordnung nach Anspruch 1, wobei die hintere Gelenkwelle (76) durch ein rückwärtiges Kreuzgelenk (92) mit einer Antriebsausgangswelle (94) des Antriebs (50) verbunden ist und die vordere Gelenkwelle (78) durch ein vorderes Kreuzgelenk (100) mit einer Ausgangswelle (104) verbunden ist, die mit der ersten Kupplungshälfte (54) gekoppelt ist.

3. Antriebsanordnung nach Anspruch 2, wobei das vordere Kreuzgelenk (100) mit einem Wellenabschnitt (102) verbunden ist, der teleskopierbar mit der Ausgangswelle (104) gekoppelt ist.

4. Antriebsanordnung nach einem der Ansprüche 1 bis 3, wobei die vordere Gelenkwelle (76) durch eine hintere Lagerung (108) in einem mit dem Einzugsgehäuse (24) starr verbundenen Gehäuse (106) abgestützt ist.

5. Antriebsanordnung nach Anspruch 4, wobei die Ausgangswelle (104) durch eine vordere Lagerung (110) im Gehäuse (106) abgestützt ist.

6. Antriebsanordnung nach Anspruch 4 oder 5, wobei die hintere Lagerung (108) und/oder vordere Lagerung (110) gegenüber dem Gehäuse (106) um ihren Mittelpunkt sphärisch drehbar gelagert sind.

7. Antriebsanordnung nach Anspruch 6, wobei die hintere Lagerung (108) gegenüber dem Gehäuse (106) durch Federkraft in eine Mittelposition vorgespannt ist und/oder die vordere Lagerung (110) gegenüber dem Gehäuse (106) frei drehbar gelagert ist.

8. Antriebsanordnung nach einem der vorhergehenden Ansprüche, wobei die Längsachse der hinteren Gelenkwelle (76) parallel zur Längsmittelebene des Feldhäckslers (10) orientiert ist.

9. Antriebsanordnung nach Anspruch 8, wobei das gemeinsame Kreuzgelenk (90) dem vorderen Ende des Bodeneingriffsmittels (14) benachbart angeordnet ist.

10. Feldhäcksler (10) mit einer Antriebsanordnung nach einem der vorhergehenden Ansprüche.

## Geänderte Patentansprüche

### Geänderte Patentansprüche gemäss Regel 137(2) EPÜ.

1. Feldhäcksler (10) mit einer Antriebsanordnung zum Antrieb eines Erntevorsatzes (20) durch den Feldhäcksler (10), wobei:
die Antriebsanordnung einen Antrieb (50), einen Antriebswellenzusammenbau (52) und eine erste, vorderseitig an einem Einzugsgehäuse (24) des Feldhäckslers (10) angeordnete Kupplungshälfte (54) umfasst,
der Antrieb (50) durch den Antriebswellenzusammenbau (52) mit der ersten Kupplungshälfte (54) verbunden ist,
die erste Kupplungshälfte (54) konfiguriert ist, mit einer zweiten Kupplungshälfte (56) des Erntevorsatzes (20) zusammenzuwirken,
und zumindest Teile des Antriebswellenzusammenbaus (52) sich in seitlicher Richtung zwischen dem Einzugsgehäuse (24) und einem Bodeneingriffsmittel (14) des Feldhäckslers (10) befinden,
**dadurch gekennzeichnet, dass** der Antriebswellenzusammenbau (52) eine vordere Gelenkwelle (78) und eine rückwärtige Gelenkwelle (76) umfasst,
dass die vordere Gelenkwelle (78) und die rückwärtige Gelenkwelle (76) durch ein gemeinsames Kreuzgelenk (90) untereinander verbunden sind,
dass die rückwärtige Gelenkwelle (76) teleskopierbar und mit ihrem rückwärtigen Ende mit dem Antrieb (50) gekoppelt ist und dass die vordere Gelenkwelle (78) gegenüber einer Vorwärtsrichtung (V) des Feldhäckslers (10) in der horizontalen Ebene nach vorn und außen abgewinkelt und mit der ersten Kupplungshälfte (54) verbunden ist.

2. Feldhäcksler (10) nach Anspruch 1, wobei die hintere Gelenkwelle (76) durch ein rückwärtiges Kreuzgelenk (92) mit einer Antriebsausgangswelle (94) des Antriebs (50) verbunden ist und die vordere Gelenkwelle (78) durch ein vorderes Kreuzgelenk (100) mit einer Ausgangswelle (104) verbunden ist, die mit der ersten Kupplungshälfte (54) gekoppelt ist.

3. Feldhäcksler (10) nach Anspruch 2, wobei das vordere Kreuzgelenk (100) mit einem Wellenabschnitt (102) verbunden ist, der teleskopierbar mit der Ausgangswelle (104) gekoppelt ist.

4. Feldhäcksler (10) nach einem der Ansprüche 1 bis 3, wobei die vordere Gelenkwelle (76) durch eine hintere Lagerung (108) in einem mit dem Einzugsgehäuse (24) starr verbundenen Gehäuse (106) abgestützt ist.

5. Feldhäcksler (10) nach Anspruch 4, wobei die Ausgangswelle (104) durch eine vordere Lagerung (110) im Gehäuse (106) abgestützt ist.

6. Feldhäcksler (10) nach Anspruch 4 oder 5, wobei die hintere Lagerung (108) und/oder vordere Lagerung (110) gegenüber dem Gehäuse (106) um ihren Mittelpunkt sphärisch drehbar gelagert sind.

7. Feldhäcksler (10) nach Anspruch 6, wobei die hintere Lagerung (108) gegenüber dem Gehäuse (106) durch Federkraft in eine Mittelposition vorgespannt ist und/oder die vordere Lagerung (110) gegenüber dem Gehäuse (106) frei drehbar gelagert ist.

8. Feldhäcksler (10) nach einem der vorhergehenden Ansprüche, wobei die Längsachse der hinteren Gelenkwelle (76) parallel zur Längsmittelebene des Feldhäckslers (10) orientiert ist.

9. Feldhäcksler (10) nach Anspruch 8, wobei das gemeinsame Kreuzgelenk (90) dem vorderen Ende des Bodeneingriffsmittels (14) benachbart angeordnet ist.
